(19) Europäisches Patentamt
European Patent Office
Office européen des brevets

(11) **EP 1 618 147 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**27.04.2011 Patentblatt 2011/17**

(45) Hinweis auf die Patenterteilung:
**06.09.2006 Patentblatt 2006/36**

(21) Anmeldenummer: **04727244.8**

(22) Anmeldetag: **14.04.2004**

(51) Int Cl.:
*C08K 9/06* (2006.01)    *C08K 9/10* (2006.01)
*C09D 5/36* (2006.01)    *C09C 1/00* (2006.01)

(86) Internationale Anmeldenummer:
**PCT/EP2004/003948**

(87) Internationale Veröffentlichungsnummer:
**WO 2004/092261 (28.10.2004 Gazette 2004/44)**

(54) **VERWENDUNG VON BESCHICHTETEN METALLISCHEN GLANZPIGMENTEN ZUR PIGMENTIERUNG VON HOCHMOLEKULAREN MATERIALIEN**

USE OF COATED METALLIC LUSTER PIGMENTS FOR PIGMENTING HIGH MOLECULAR WEIGHT MATERIALS

UTILISATION DE PIGMENTS BRILLANTS METALLIQUES ENROBES, POUR LA PIGMENTATION DE MATERIAUX HAUTEMENT MOLECULAIRES

(84) Benannte Vertragsstaaten:
**AT BE BG CH CY CZ DE DK EE ES FI FR GB GR HU IE IT LI LU MC NL PL PT RO SE SI SK TR**

(30) Priorität: **16.04.2003 DE 10317862**

(43) Veröffentlichungstag der Anmeldung:
**25.01.2006 Patentblatt 2006/04**

(73) Patentinhaber: **BASF SE**
**67056 Ludwigshafen (DE)**

(72) Erfinder:
• **SEEGER, Oliver**
  **68165 Mannheim (DE)**
• **MRONGA, Norbert**
  **69221 Dossenheim (DE)**
• **ETZRODT, Günter**
  **70180 Stuttgart (DE)**
• **BÖHM, Arno**
  **68305 Mannheim (DE)**

(56) Entgegenhaltungen:
EP-A2- 0 708 154        WO-A1-99/35194
WO-A1-2004/035683    WO-A2-2004/026268
US-A- 5 607 504        US-A- 6 013 370
US-A1- 2003 129 404

• 'Progress in Organic Coatings 37', 1999 Artikel A. KIEHL, K. GREIWE: 'Encapsulated aluminium pigments', Seiten 179 - 183

Bemerkungen:
Die Akte enthält technische Angaben, die nach dem Eingang der Anmeldung eingereicht wurden und die nicht in dieser Patentschrift enthalten sind.

**Beschreibung**

Die vorliegende Erfindung betrifft die Verwendung von Glanzpigmenten auf der Basis von Aluminiumplättchen, die mit einer sichtbares Licht nicht absorbierenden, niedrigbrechenden, dielektrischen Schicht umhüllt sind, zur Pigmentierung von Kunststoffen bzw. Thermoplasten gemäß den Ansprüchen 1 und 2.

Außerdem betrifft die Erfindung die Kunststoffe bzw. Thermoplasten gemäß Anspruch 6, die mit diesen Glanzpigmenten pigmentiert sind.

Glanz- oder Effektpigmente werden in vielen Bereichen der Technik eingesetzt, beispielsweise in Automobillacken, in dekorativen Beschichtungen, in der Kunststoffeinfärbung, in Anstrich- und Druckfarben sowie in der Kosmetik.

Ihre optische Wirkung beruht auf der gerichteten Reflexion von Licht an überwiegend flächig ausgebildeten, zueinander parallel ausgerichteten, metallischen oder stark lichtbrechenden Pigmentteilchen. Mit dem Betrachtungswinkel ändern sich die Helligkeit und zum Teil auch der Farbton.

Koloristisch lassen sich zwei Grenzfälle unterscheiden, der Metalleffekt und der Perlglanz.

Bei Metalleffektpigmenten, z.B. unbeschichteten oder beschichteten Aluminiumplättchen, dominiert die spiegelnde Reflexion an den glatten Oberflächen der Plättchen. Die mit diesen Pigmenten eingefärbten Lacke oder Kunststoffe zeigen daher einen winkelabhängigen Hell-Dunkel-Effekt, auch als Helligkeitsflop bezeichnet. Für die Metalleffektpigmente typisch ist der Metallglanz und das hervorragende Deckvermögen.

Perlglanzpigmente basieren dagegen auf transparenten, hochbrechenden Plättchen, z.B. titandioxidbeschichteten Glimmerschuppen. Nach Parallelorientierung der Plättchen im Anwendungsmedium wird durch Mehrfachreflexion der auch durch die Pigmentplättchen hindurchtretenden Lichtstrahlen ein seidenartiger, weicher Glanzeffekt, der gewissermaßen aus der Tiefe kommt und wie er auch für Perlen charakteristisch ist, erzeugt.

Allgemein besteht für die Einfärbung der unterschiedlichsten Anwendungsmedien besonderes Interesse an silberfarbenen Metalleffektpigmenten mit hoher Reflexion, insbesondere hoher Helligkeit in der Nähe des Glanzwinkels und damit ausgeprägtem Helligkeitsflop.

Insbesondere bei der Kunststoffeinfärbung werden zusätzliche hohe Anforderungen an die Anwendungseigenschaften der Pigmente gestellt. So müssen die Metalleffektpigmente eine hohe mechanische Stabilität aufweisen, um den bei der Einarbeitung in den Kunststoff auftretenden Scherkräften standzuhalten, ohne verformt oder gar zerbrochen zu werden, was verminderten metallischen Glanz und ein unruhiges Erscheinungsbild, im Fall der Spritzgußapplikation oder der Blasformung auch deutlichere Fließlinien, zur Folge hätte.

Zudem müssen die Effektpigmente gut im Kunststoff ausrichtbar sein, da nur bei paralleler Orientierung möglichst aller Pigmentplättchen zur Oberfläche optimaler metallischer Glanz und ein homogenes Erscheinungsbild erhalten werden. Diese parallele Anordnung wird insbesondere beim Spritzgußverfahren gestört, da sich beim Spritzgießvorgang im Werkzeug verschiedene, ungleichmäßige Fließfronten bilden. Treffen zwei Fließfronten zusammen, richten sich die Pigmentplättchen an dieser Stelle auf und sind dann nicht mehr parallel zur Oberfläche ausgerichtet, was wiederum zu einem unruhigen Erscheinungsbild mit Wolken, Fließlinien und Fließnähten führt. Zusätzlich ist die mechanische Stabilität des Kunststoffs an den Fließnähten verringert, da das Polymer an den Fließliniengrenzen nur unvollständig verschmilzt.

In der WO-A-99/35194 werden Metalleffektpigmente beschrieben, die einen zentralen reflektierenden Aluminiumfilm mit einer Dicke von 40 bis 150 nm, vorzugsweise von 100 nm, aufweisen, der beidseitig mit einem Siliciumdioxid- oder Magnesiumfluoridfilm einer Dicke von 50 bis 200 nm, bevorzugt 100 nm, beschichtet ist. Diese Pigmente werden in sehr aufwendiger Weise durch abwechselndes Bedampfen einer Substratfolie im Hochvakuum mit den jeweiligen Filmmaterialien, Entfernen der Folie von dem aufgedampften mehrschichtigen Film und dessen Zerkleinerung auf Pigmentteilchengröße hergestellt. Durch dieses Herstellungsverfahren bedingt, ist der zentrale Metallfilm dieser Pigmente nur an der Plättchenober- und -unterseite beschichtet.

Die in der WO-A-99/35194 offenbarten Pigmente sollen hohe Reflexion und mechanische Stabilität zeigen. Die mechanische Stabilität der mehrschichtigen Pigmentteilchen ist zwar gegenüber auf dem unbeschichteten Aluminiumfilm basierenden Pigmentteilchen erhöht, die Reflexion nimmt aber, wie im übrigen auch für den Fachmann zu erwarten war, durch die Beschichtung des Metallfilms deutlich ab. Die tatsächliche Verringerung der Reflexion übertrifft dabei die in der WO-A-99/35194 berechnete Verringerung.

Gemäß den JP-A-1987/96565 und JP-A-1987/96566 können fließlinienfreie Kunststoffeinfärbungen mit hohem metallischen Glanz durch Einsatz von grobteiligen unbeschichteten Aluminiumplättchen, die große Plättchendurchmesser und insbesondere auch Plättchendicken aufweisen, erhalten werden. Diese Pigmentplättchen sind zwar mechanisch stabil, führen aufgrund ihrer Grobteiligkeit aber zu oftmals unerwünschten Glitzereffekten ("sparkling"), zeigen einen nur geringen Helligkeitsflop und haben geringeres Deckvermögen als feinteiligere Pigmente.

Der Erfindung lag die Aufgabe zugrunde, silberfarbene Metalleffektpigmente bereitzustellen, die hohe Helligkeit in der Nähe des Glanzwinkels und damit einen ausgeprägten Helligkeitsflop aufweisen und zudem auch vorteilhafte mechanische Eigenschaften insbesondere auch bei der Einfärbung von Kunststoffen zeigen.

Demgemäß wurde die Verwendung von Glanzpigmenten auf der Basis von Aluminiumplättchen, die mit einer sichtbares Licht nicht absorbierenden, niedrigbrechenden, dielektrischen Schicht umhüllt sind, zur Pigmentierung von Kunststoffe bzw. Thermoplasten gefunden.

Nicht zuletzt wurden auch Kunststoffe bzw. Thermoplasten gefunden, die mit diesen Glanzpigmenten pigmentiert sind.

Die erfindungsgemäß zu verwendenden Glanzpigmente basieren auf Aluminiumplättchen, die an allen Seitenflächen mit einer farblosen, dielektrischen Beschichtung versehen sind. Diese Beschichtung ist niedrigbrechend, d.h. sie weist in der Regel einen Brechungsindex n von < 1,8 auf.

Die Dicke der dielektrischen Schicht beträgt üblicherweise 100 bis 800 nm, bevorzugt 250 bis 450 nm und besonders bevorzugt 300 bis 400 nm.

Als Substrat bevorzugt sind Aluminiumflakes, die in einfacher Weise durch Herausstanzen aus Aluminiumfolie oder nach gängigen Verdüsungs- und Mahltechniken herstellen sind. Es können handelsübliche Produkte eingesetzt werden.

Die Größe der Aluminiumplättchen ist an sich nicht kritisch und kann auf den gewünschten optischen Effekt abgestimmt werden. In der Regel haben die Aluminiumplättchen mittlere Durchmesser ($d_{50}$-Wert) von etwa 5 bis 200 $\mu$m, insbesondere von 10 bis 50 $\mu$m, und Dicken von etwa 0,1 bis 5 $\mu$m, vor allem von 0,1 bis 0,3 $\mu$m. Ihre spezifische freie Oberfläche (BET) beträgt im allgemeinen 0,1 bis 8 $m^2$/g.

Für die niedrigbrechende Beschichtung der erfindungsgemäß zu verwendenden Glanzpigmente kommen alle farblosen Materialien in Betracht, die filmartig und dauerhaft auf die Aluminiumplättchen aufgebracht werden können. Außerdem sollten diese Materialien den Anforderungen bei der Anwendung genügen, d.h., die erforderlichen Echtheiten, insbesondere auch Thermostabilitäten, aufweisen. Als Beispiele für derartige Materialien seien Siliciumdioxid, Siliciumoxidhydrat, Aluminiumoxid, Aluminiumoxidhydrat, Magnesiumfluorid und Aluminiumphosphat genannt. Besonders bevorzugt sind dabei Siliciumdioxid, Siliciumoxidhydrat und deren Mischungen.

Derartige Glanzpigmente sind z.B. aus der EP-A-708 154 als Zwischenprodukte für die dort beschriebenen goniochromatischen Glanzpigmente, die mindestens eine weitere selektiv absorbierende, hochbrechende Beschichtung aufweisen, bekannt. Sie werden vorteilhaft naßchemisch durch hydrolytische Zersetzung von organischen Siliciumverbindungen, bei denen die organischen Reste über Sauerstoffatome an das Siliciumatom gebunden sind, vor allem von Alkoxysilanen, in Gegenwart eines organischen Lösungsmittels, in dem die Siliciumverbindungen löslich sind, und anschließende Trocknung hergestellt.

Ihre Herstellung kann auch nach dem in der EP-A-668 329 beschriebenen CVD-Verfahren (chemical vapor deposition) erfolgen, indem mindestens einen Alkanoyloxyrest enthaltende flüchtige Silane in Gegenwart von Wasserdampf und/oder Sauerstoff und der bewegten Aluminiumplättchen zersetzt werden. Bevorzugt ist jedoch die naßchemische Beschichtung.

Gewünschtenfalls können die erfindungsgemäß zu verwendenden Glanzpigmente zur Steigerung ihrer Kompatibilität mit den zu pigmentierenden Kunststoffe bzw. Thermoplasten mit einer zusätzlichen farblosen Außenschicht aus einem oberflächenmodifizierenden Mittel versehen werden. Geeignet sind hierfür z.B. Alkoxyalkylsilane, deren Alkylreste endständig funktionalisiert sind.

Überraschenderweise zeigen die erfindungsgemäß zu verwendenden Glanzpigmente bei der Anwendung eine deutlich höhere Reflexion als die unbeschichteten Aluminiumpigmente. So ist die Reflexion im sichtbaren Bereich des elektromagnetischen Spektrums z.B. in Polypropylen im allgemeinen um etwa 30 bis 40% erhöht. Das entspricht einer Erhöhung der Helligkeit L* von etwa 10 bis 15 Punkten, gemessen 5° außerhalb des Glanzwinkels.

Die erfindungsgemäß zu verwendenden Glanzpigmente sind nicht nur in Glanzwinkelnähe besonders hell und damit auch besonders brillant, sie zeichnen sich zudem durch einen ausgeprägten Helligkeitsflop aus.

Außerdem können sie hervorragend in Kunststoffe eingearbeitet werden, wobei deutlich verringerte Fließlinienbildung zu beobachten ist.

Mit den erfindungsgemäß zu verwendenden Glanzpigmenten können Kunststoffe bzw. Thermoplasten pigmentiert werden.

Es können sowohl Thermoplaste als auch Duroplaste eingesetzt werden. Beispielhaft seien aufgeführt: Polyethylen (PE), Polypropylen (PP), Polyisobuten (PIB), Polyvinyichlorid (PVC), Polyvinylidendifluorid (PVDF), Polycarbonat (PC), Polycarbonat-Polyester-Blends, Polyethylenterephthalat (PET), Polyethylennaphthenat (PEN), Polybutylenterephthalat (PBT), Polystyrol (PS), Acrylat-Butadien-Styrol-Copolymere (ABS), Styrol-Acrylnitril-Copolymere (SAN), Polymethyl(meth)acrylat (PM(M)A), Polybutyl(meth)acrylat (PB(M)A), Polyamide, wie PA 6, PA 6.6 und PA 12, Polyether, Polyphenylenether, Polyethersulfone, Polyetherketone, Polyphenylensulfide, Polyimide, Polyetherimide, Polyesterimide, Polyoxymethylen und Polyurethane (PU, TPU). Explizit genannt seien auch polymerisierbare Gießharze auf Styrol-, Acrylat- oder Polyesterbasis, nachhärtbare Polykondensationsharze auf Melamin- oder Epoxybasis und PVC- und PUR-Streichpasten, die z.B. für Textilbeschichtungen verwendet werden.

Beispiele

A) Herstellung von erfindungsgemäß verwendeten Glanzpigmenten

Beispiel 1 A

In einer in einem 1 m³-Rührkessel vorgelegten Mischung von 480 kg Ethanol und 4,4 kg Tetraethoxysilan wurden 50 kg Aluminiumpigmentpaste (mittlerer Plättchendurchmesser $d_{50}$-Wert 17 $\mu$m, Plättchendicke ca. 0,14 $\mu$m; Alpate® NS 7670, Fa. Toyal Europe; Feststoffanteil 65 Gew.-%) unter Rühren in 1,5 h dispergiert. Nach Zugabe von zunächst 142 kg Wasser und dann 14,3 kg einer 25 gew.-%igen wäßrigen Ammoniaklösung wurde die Suspension langsam auf 60°C erhitzt. Ab einer Temperatur von 55°C wurde über getrennte Dosiervorrichtungen gleichzeitig mit der Dosierung von (1) 3,6 kg/h Tetraethoxysilan, (2) 0,94 kg/h Ethanol und (3) 0,86 kg/h 2,5 gew.-%iger wäßriger Ammoniaklösung begonnen.

Nach Zugabe von 306 kg Tetraethoxysilan (85 h Beschichtungszeit) wurden die Dosierungen gestoppt und weitere 5 h nachgerührt. Nach Abkühlen der Suspension auf Raumtemperatur wurde das beschichtete Aluminiumpigment abfiltriert, zunächst mit Ethanol und dann mit Wasser gewaschen, anschließend auf Bleche verteilt und bei 100°C im Trockenschrank getrocknet.

Es wurden 118 kg hellsilbernes $SiO_2$-beschichtetes Aluminiumpigment ($SiO_2$-Gehalt 69 Gew.-%, Schichtdicke der $SiO_2$-Beschichtung 340 nm) erhalten.

Beispiel 2A

Es wurde analog Beispiel 1 A vorgegangen, jedoch betrug die Beschichtungszeit nur 44 h, was einer Zudosierung von 158,5 kg Tetraethoxysilan entspricht.

Es wurden 79 kg hellsilbernes $SiO_2$-beschichtetes Aluminiumpigment ($SiO_2$-Gehalt 59 Gew.-%, Schichtdicke der $SiO_2$-Beschichtung 230 nm) erhalten.

Beispiel 3A

Es wurde analog Beispiel 1 A vorgegangen, jedoch betrug die Beschichtungszeit nur 20 h, was einer Zudosierung von 72 kg Tetraethoxysilan entspricht.

Es wurden 54 kg hellsilbernes $SiO_2$-beschichtetes Aluminiumpigment ($SiO_2$-Gehalt 41 Gew.-%, Schichtdicke der $SiO_2$-Beschichtung 109 nm) erhalten.

Beispiel 4A

Es wurde analog Beispiel 1 A vorgegangen, jedoch betrug die Beschichtungszeit nur 13 h, was einer Zudosierung von 46,8 kg Tetraethoxysilan entspricht.

Es wurden 47 kg hellsilbernes $SiO_2$-beschichtetes Aluminiumpigment ($SiO_2$-Gehalt 32 Gew.-%, Schichtdicke der $SiO_2$-Beschichtung 75 nm) erhalten.

Beispiel 5A

Zu einer in einem 4-Hals-Glasrundkolben vorgelegten Suspension von 150 g Aluminiumpigmentpaste (mittlerer Plättchendurchmesser $d_{50}$-Wert 15 $\mu$m, Plättchendicke ca. 0,13 $\mu$m; Alpate F 795, Fa. Toyal Europe; Feststoffanteil 70 Gew.-%) in 1,6 l Ethanol wurden unter intensivem Rühren nacheinander 16,4 ml Tetraethoxysilan, 450 ml Wasser und 40 g 25 gew.-%ige wäßrige Ammoniaklösung zugegeben. Nach Erhitzen auf 60°C wurden (1) 40 ml/h Tetraethoxysilan, (2) 10 ml/h 2,5 gew.-%ige wäßrige Ammo-niaklösung und (3) 15 ml/h Ethanol unter Rühren und Konstanthalten der Temperatur auf 60°C getrennt zudosiert.

Nach Zugabe von 951 ml Tetraethoxysilan (Beschichtungszeit 23,8 h) wurden die Dosierungen gestoppt und 1 h nachgerührt. Nach Abkühlen auf Raumtemperatur wurde das beschichtete Aluminiumpigment abfiltriert, mit Ethanol gewaschen und bei 100°C im Vakuum getrocknet.

Es wurden 364 g hellsilbernes $SiO_2$-beschichtetes Aluminiumpigment ($SiO_2$-Gehalt 71 Gew.-%, Schichtdicke der $SiO_2$-Beschichtung 389 nm) erhalten.

Beispiel 6A

Es wurde analog Beispiel 5A vorgegangen, jedoch wurden insgesamt 723 ml Tetraethoxysilan eingesetzt.

Es wurden 303 g hellsilbernes $SiO_2$-beschichtetes Aluminiumpigment ($SiO_2$-Gehalt 64 Gew.-%, Schichtdicke der $SiO_2$-Beschichtung 282 nm) erhalten.

Beispiel 7A

Es wurde analog Beispiel 5A vorgegangen, jedoch wurden insgesamt 334 ml Tetraethoxysilan eingesetzt.
Es wurden 190 g hellsilbernes $SiO_2$-beschichtetes Aluminiumpigment ($SiO_2$-Gehalt 46 Gew.-%, Schichtdicke der $SiO_2$-Beschichtung 135 nm) erhalten.

Beispiel 8A

Es wurde analog Beispiel 5A vorgegangen, jedoch wurden insgesamt 195 ml Tetraethoxysilan eingesetzt.
Es wurden 154 g hellsilbernes $SiO_2$-beschichtetes Aluminiumpigment ($SiO_2$-Gehalt 34 Gew.-%, Schichtdicke der $SiO_2$-Beschichtung 82 nm) erhalten.

Beispiel 9A

Es wurde analog Beispiel 5A vorgegangen, jedoch wurden insgesamt 119 ml Tetraethoxysilan eingesetzt.
Es wurden 133 g hellsilbernes $SiO_2$-beschichtetes Aluminiumpigment ($SiO_2$-Gehalt 22 Gew.-%, Schichtdicke der $SiO_2$-Beschichtung 50 nm) erhalten.

Beispiel 10A

Zu einer in einem 3-Hals-Glasrundkolben vorgelegten Suspension von 350 g Aluminiumpigmentpaste (mittlerer Plättchendurchmesser $d_{50}$-Wert 75 $\mu$m, Plättchendicke ca. 0,5 $\mu$m; Stapa Metallux® 211, Fa. Eckart-Werke; Feststoffanteil 70 Gew.-%) in 1,3 l Ethanol wurden unter intensivem Rühren nacheinander 14,2 ml Tetraethoxysilan, 400 ml Wasser und 40 g 25 gew.-%ige wäßrige Ammoniaklösung zugegeben. Nach Erhitzen auf 60°C wurden (1) 25 ml/h Tetraethoxysilan, (2) 10 ml/h 2,5 gew.-%ige wäßrige Ammoniaklösung und (3) 10 ml/h Ethanol unter Rühren und Konstanthalten der Temperatur auf 60°C zudosiert.
Nach Zugabe von 602 ml Tetraethoxysilan (Beschichtungszeit 23,5 h) wurden die Dosierungen gestoppt und 1 h nachgerührt. Nach Abkühlen auf Raumtemperatur wurde das beschichtete Aluminiumpigment abfiltriert, mit Ethanol gewaschen und bei 100°C im Vakuum getrocknet.
Es wurden 415 g hellsilbernes $SiO_2$-beschichtetes Aluminiumpigment ($SiO_2$-Gehalt 39,1 Gew.-%, Schichtdicke der $SiO_2$-Beschichtung 335 nm) erhalten.

Beispiel 11 A

Es wurde analog Beispiel 10A vorgegangen, jedoch wurden insgesamt 664 ml Tetraethoxysilan eingesetzt.
Es wurden 432 g hellsilbernes $SiO_2$-beschichtetes Aluminiumpigment ($SiO_2$-Gehalt 41,9 Gew.-%, Schichtdicke der $SiO_2$-Beschichtung 383 nm) erhalten.

B) Anwendung der hergestellten Glanzpigmente zur Pigmentierung von Kunststoffen

Mit den in Beispiel 1 A bis 11A hergestellten Glanzpigmenten wurden Kunststoffplättchen pigmentiert und anschließend farbmetrisch vermessen. Die Numerierung der Anwendungsbeispiele entspricht dabei der Numerierung der Herstellungsbeispiele, die Anwendungsbeispiele werden durch ein nachgestelltes B gekennzeichnet. D.h. also, im Anwendungsbeispiel 1B wurde das Glanzpigment aus dem Herstellungsbeispiel 1A eingesetzt, usw.
Zum Vergleich wurden auch mit den jeweiligen unbeschichteten Aluminiumpigmenten Kunststoffplättchen pigmentiert.
Zur Ermittlung ihrer farbmetrischen Daten wurden die pigmentierten Kunststoffplättchen nach Meßmethode I und II vermessen. Die erhaltenen Daten wurden in die Farbwerte L*, a* und b* nach CIE umgerechnet (Normlichtart D65, Normbetrachter 10°).

Meßmethode I

Die pigmentierten Kunststoffplättchen wurden mit einem Goniospektralfotometer Multiflash (Fa. Optronic, Berlin) winkelabhängig vermessen. Der Beleuchtungswinkel wurde konstant bei 45° gehalten, während der Differenzwinkel zwischen Meßwinkel und Glanzwinkel verändert wurde.

Als Standard für die Messung der Helligkeit wurde eine Weißkachel verwendet.

Zur Charakterisierung des Helligkeitsflops der Plättchen beim Wechsel von Aufsicht zu Schrägsicht wurde ein Metalleffektwert ME wie folgt definiert:

$$ ME = \frac{(L^*_{25} - L^*_{75})}{L^*_{75}} $$

Dabei bedeuten:

$L^*_{25}$: Helligkeit des Plättchens bei einer Differenz zum Glanzwinkel von 25°
$L^*_{75}$: Helligkeit des Plättchens bei einer Differenz zum Glanzwinkel von 75°

Je größer die ME-Werte sind, umso ausgeprägter ist der Helligkeitsflop.

Die mit Meßmethode I erhaltenen Ergebnisse sind in Tabelle 1, 3 und 5 zusammengefaßt.

Meßmethode II

Die pigmentierten Kunststoffplättchen wurden mit einem Goniospektralfotometer GKR 311 (Fa. Zeiss) winkelabhängig vermessen. Der Differenzwinkel zwischen Meßwinkel und Glanzwinkel wurde konstant bei 5° gehalten, während der Beleuchtungswinkel in 5°-Schritten geändert wurde.

Als Standard wurde das mit dem jeweiligen unbeschichteten Aluminiumpigment pigmentierte Kunststoffplättchen verwendet, dem die Helligkeit 100 zugeordnet wurde.

Die mit Meßmethode II erhaltenen Ergebnisse sind in Tabelle 2, 4 und 6 zusammengefaßt. Die Winkelangaben beziehen sich dabei jeweils auf die Probenhorizontale.

Beispiele 1 B bis 4B

Die SiO$_2$-beschichteten Aluminiurnpigmente aus den Beispielen 1A bis 4A wurden jeweils mit einem Dissolverrührer bei 1400 U/min 30 min in einer 20 gew.-%igen Lösung von Polymethylmethacrylat (PMMA; Lucryl® , BASF) in Aceton dispergiert. Die jeweils erhaltene Suspension wurde in ein Wirbelbett eingedüst und das Aceton verdampft.

Das erhaltene 5 gew.-%ig pigmentierte PMMA-Granulat wurde durch Mischen mit weiterem PMMA auf eine Pigmentkonzentration von 2 Gew.-% verdünnt und als Farbschicht in einer Dreischichtfolie (1,2 m breit, endlos) vergossen.

Die Dreischichtfolie hatte folgenden Aufbau:

50 $\mu$m klare Deckschicht (PMMA)
200 $\mu$m Farbschicht (PMMA + Pigment)
600 $\mu$m Unterschicht (Acrylnitril/Styrol/Acrylester-Copolymer, ASA; Luran® S, BASF)

Die bei der farbmetrischen Vermessung nach Meßmethode I und II jeweils erhaltenen Ergebnisse sind in Tabelle 1 bzw. 2 zusammengefaßt. Zum Vergleich sind in Tabelle 1 die mit dem unbeschichteten Aluminiumpigment aus Beispiel 1A erhaltenen Ergebnisse mitaufgeführt (Beispiel V1). In Tabelle 2 bedeuten:

BW: Beleuchtungswinkel
MW: Meßwinkel

Tabelle 1

| Beispiel | $L^*_{25}$ | $L^*_{75}$ | ME |
|---|---|---|---|
| 1B | 81,4 | 30,7 | 1,65 |
| 2B | 94,2 | 29,7 | 2,17 |
| 3B | 93,4 | 28,9 | 2,23 |

(fortgesetzt)

| Beispiel | $L^*_{25}$ | $L^*_{75}$ | ME |
|---|---|---|---|
| 4B | 79,8 | 27,5 | 1,91 |
| V1 | 74,1 | 40,2 | 0,84 |

Tabelle 2

| BW [°] | MW [°] | L* (Bsp. 1B) | L* (Bsp. 2B) | L* (Bsp. 3B) | L* (Bsp. 4B) |
|---|---|---|---|---|---|
| 75 | 100 | 112,1 | 113,0 | 119,7 | 132,9 |
| 70 | 105 | 111,5 | 112,7 | 119,2 | 132,4 |
| 65 | 110 | 111,2 | 112,4 | 118,9 | 132,1 |
| 60 | 115 | 110,8 | 112,1 | 118,8 | 131,7 |
| 55 | 120 | 110,6 | 112,4 | 118,7 | 131,4 |
| 50 | 125 | 110,2 | 112,2 | 118,6 | 130,9 |
| 45 | 130 | 110,0 | 112,3 | 118,6 | 130,5 |
| 40 | 135 | 109,4 | 112,1 | 118,4 | 129,6 |
| 35 | 140 | 108,9 | 112,1 | 118,3 | 128,6 |
| 30 | 145 | 108,0 | 111,8 | 117,5 | 126,9 |
| 25 | 150 | 106,5 | 110,9 | 116,0 | 123,9 |

Beispiele 5B bis 9B

Die $SiO_2$-beschichteten Aluminiumpigmente aus den Beispielen 5A bis 9A wurden jeweils in glasklarem Polypropylen (Metocene® X 50081, Basell) in einer Konzentration von 1 Gew.-% vorextrudiert und zu 6 cm X 4,4 cm X 0,2 cm großen Spritzplättchen verarbeitet.

Die bei der farbmetrischen Vermessung nach Meßmethode I und II jeweils erhaltenen Ergebnisse sind in Tabelle 3 bzw. 4 zusammengefaßt. Zum Vergleich sind in Tabelle 3 die mit dem unbeschichteten Aluminiumpigment aus Beispiel 5A erhaltenen Ergebnisse mitaufgeführt (Beispiel V2). In Tabelle 4 bedeuten:

BW: Beleuchtungswinkel
MW: Messwinkel

Tabelle 3

| Beispiel | $L^*_{25}$ | $L^*_{75}$ | ME |
|---|---|---|---|
| 5B | 89,5 | 29,4 | 2,04 |
| 6B | 95,0 | 29,0 | 2,28 |
| 7B | 104,3 | 30,6 | 2,41 |
| 8B | 105,2 | 30,4 | 2,46 |
| 9B | 105,6 | 32,1 | 2,29 |
| V2 | 104,6 | 36,6 | 1,86 |

Tabelle 4

| BW[°] | MW[°] | L* (Bsp. 5B) | L* (Bsp. 6B) | L* (Bsp. 7B) | L* (Bsp. 8B) | L* (Bsp. 9B) |
|---|---|---|---|---|---|---|
| 75 | 100 | 107,1 | 110,9 | 113,3 | 116,7 | 112,0 |
| 70 | 105 | 106,7 | 110,9 | 112,6 | 115,6 | 111,5 |
| 65 | 110 | 107,0 | 111,0 | 112,5 | 115,4 | 111,3 |
| 60 | 115 | 106,8 | 110,8 | 112,0 | 114,9 | 110,7 |
| 55 | 120 | 106,4 | 110,6 | 111,5 | 114,3 | 110,1 |
| 50 | 125 | 106,5 | 110,3 | 111,3 | 114,0 | 109,9 |
| 45 | 130 | 106,8 | 110,1 | 111,3 | 114,0 | 109,7 |
| 40 | 135 | 106,4 | 109,0 | 110,6 | 113,2 | 109,0 |
| 35 | 140 | 105,8 | 108,2 | 109,5 | 112,1 | 108,0 |
| 30 | 145 | 104,9 | 106,2 | 107,6 | 110,0 | 106,3 |
| 25 | 150 | 103,5 | 104,0 | 105,4 | 107,7 | 103,1 |

Beispiele 10B und 11 B

Die $SiO_2$-beschichteten Aluminiumpigmente aus den Beispielen 10A und 11 A wurden jeweils in glasklarem Polypropylen (Metocene X 50081, Basell) in einer Konzentration von 2 Gew.-% vorextrudiert und zu 6 cm X 4,4 cm X 0,2 cm großen Spritzplättchen verarbeitet.

Die bei der farbmetrischen Vermessung nach Meßmethode I und II jeweils erhaltenen Ergebnisse sind in Tabelle 4 bzw. 5 zusammengefaßt. Zum Vergleich sind in Tabelle 5 die mit dem unbeschichteten Aluminiumpigment aus Beispiel 10A erhaltenen Ergebnisse mitaufgeführt (Beispiel V3). In Tabelle 6 bedeuten:

BW: Beleuchtungswinkel
MW: Meßwinkel

Tabelle 5

| Beispiel | $L^*_{25}$ | $L^*_{75}$ | ME |
|---|---|---|---|
| 10B | 79,2 | 35,1 | 1,26 |
| 11B | 79,7 | 35,2 | 1,26 |
| V3 | 76,3 | 38,1 | 1,00 |

Tabelle 6

| BW [°] | MW[°] | L* (Bsp. 10B) | L* (Bsp. 11B) |
|---|---|---|---|
| 75 | 100 | 113,3 | 115,5 |
| 70 | 105 | 113,2 | 115,5 |
| 65 | 110 | 113,0 | 115,4 |
| 60 | 115 | 113,1 | 115,2 |
| 55 | 120 | 113,0 | 115,2 |
| 50 | 125 | 112,0 | 114,1 |
| 45 | 130 | 110,7 | 112,9 |
| 40 | 135 | 110,1 | 112,1 |
| 35 | 140 | 106,1 | 108,0 |

(fortgesetzt)

| BW [°] | MW[°] | L* (Bsp. 10B) | L* (Bsp. 11B) |
|---|---|---|---|
| 30 | 145 | 102,9 | 105,0 |
| 25 | 150 | 100,4 | 103,7 |

**Patentansprüche**

1. Verwendung von silberfarbenen Glanzpigmenten auf der Basis von Aluminiumplättchen zur Pigmentierung von Kunststoffen, wobei die Aluminiumplättchen mit einer sichtbares Licht nicht absorbierenden, niedrigbrechenden dielektrischen Beschichtung umhüllt sind, und weiterhin die Beschichtung besteht aus:

   einer farblosen Schicht a), die auf die Aluminiumplättchen aufgebracht ist, die gegebenenfalls mit einer farblosen Außenschicht b) aus einem oberflächenmodifizierenden Mittel versehen ist, und wobei die Schicht a) im wesentlichen aus Siliciumdioxid und/oder Siliciumoxidhydrat besteht und wobei die dielektrische Beschichtung eine Dicke von 100 bis 800 nm aufweist.

2. Verwendung von silberfarbenen Glanzpigmenten auf der Basis von Aluminiumplättchen zur Pigmentierung von Thermoplasten, wobei die Aluminiumplättchen mit einer sichtbares Licht nicht absorbierenden, niedrigbrechenden dielektrischen Beschichtung umhüllt sind, und weiterhin die Beschichtung besteht aus: einer farblosen Schicht a), die auf die Aluminiumplättchen aufgebracht ist, die gegebenenfalls mit einer farblosen Außenschicht b) aus einem oberflächenmodifizierenden Mittel versehen ist, und wobei die Schicht a) im wesentlichen aus Siliciumdioxid und/ oder Siliciumoxidhydrat besteht.

3. Verwendung nach Anspruch 1, **dadurch gekennzeichnet, dass** die Kunststoffe ausgewählt werden, aus der Gruppe bestehend aus Polyethylen (PE) Polyproylen (PP), Polyisobuten (PIB), Polyvinylchlorid (PVC), Polyvinylidendifluorid (PVDF), Polycarbonat (PC), Polycarbonat-Polyester-Blends, Polyethylenterephthalat (PET), Polyethylennaphthenat (PEN), Polybutylenterephthalat (PBT), Polystryrol (PS), Acrylat-Butadien-Styrol-Copolymere (ABS), Stryol-Acrylnitril-Copolymere (SAN), Polymethyl(meth)acrylat (PM(M)A), Polybutyl(meth)acrylat (PB(M)A), Polyamide, wie PA 6, PA 6.6 und PA 12, Polyether, Polyphenylenether, Polyethersulfone, Polyetherketone, Polyphenylensulfide, Polyimide, Polyetherimide, Polyesterimide, Polyoxymethylen, Polyurethane (PU, TPU), polymerisierbare Gießharze auf Styrol-, Acrylat- oder Polyesterbasis, nachhärtbare Polykondenstionsharze auf Melamin- oder Epoxybasis und PVC- und PUR-Streichpasten.

4. Verwendung nach Anspruch 1 bis 3, **dadurch gekennzeichnet, dass** die dielektrische Beschichtung einen Berechnungsindex n < 1,8 aufweist.

5. Verwendung nach einem der Ansprüche 1 bis 4, **dadurch gekennzeichnet, dass** die dielektrische Beschichtung eine Dicke von 250 bis 450 nm aufweist.

6. Kunststoffe, die mit den Glanzpigmenten gemäß den Ansprüchen 1 bis 5 pigmentiert sind.

**Claims**

1. The use of silver-colored luster pigments based on aluminum platelets for pigmenting plastics, wherein the aluminum platelets are coated with a low refractive dielectric coating which does not absorb visible light and which further consists of:

   a colorless layer a) on the aluminum platelets which is optionally provided with a colorless outside layer b) of a surface-modifying agent, and wherein said layer a) consists essentially of silicon dioxide and/or silicon oxide hydrate and wherein the dielectric coating has a thickness in the range from 100 to 800 nm.

2. The use of silver-colored luster pigments based on aluminum platelets for pigmenting thermoplastics, wherein the aluminum platelets are coated with a low refractive dielectric coating which does not absorb visible light and which further consists of:

a colorless layer a) on the aluminum platelets which is optionally provided with a colorless outside layer b) of a surface-modifying agent, and wherein said layer a) consists essentially of silicon dioxide and/or silicon oxide hydrate.

**3.** The use according to claim I, **characterized in that** the plastics are selected from the group consisting of polyethylene (PE), polypropylene (PP), polyisobutene (PIB), polyvinyl chloride (PVC), polyvinylidene difluoride (PVDF), polycarbonate (PC), polycarbonate-polyester blends, polyethylene terephthalate (PET), polyethylene naphthenate (PEN), polybutylene terephthalate (PBT), polystyrene (PS), acrylate-butadiene-styrene copolymers (ABS), styreneacrylonitrile copolymers (SAN), polymethyl (meth)acrylate (PM(M)A), polybutyl (meth)acrylate (PB(M)A), polyamides, such as N6, N66 and N12, polyethers, polyphenylene ethers, polyether sulfones, polyether ketones, polyphenylene sulfides, polyimides, polyetherimides, polyesterimides, polyoxymethylene, polyurethanes (PU, TPU), polymerizable casting resins based on styrene, acrylate or polyester, postcurable polycondensation resins based on melamine or epoxy and PVC and PU coating pastes.

**4.** The use according to claim 1 or 2 or 3, **characterized in that** the dielectric coating has a refractive index n < 1.8.

**5.** The use according to any one of claims 1 to 4, **characterized in that** the dielectric coating has a thickness in the range from 250 to 450 nm.

**6.** Plastics pigmented with the luster pigments according to claims 1 to 5.

## Revendications

**1.** Utilisation de pigments brillants argentés à base de paillettes d'aluminium pour la pigmentation de matériaux synthétiques, où les paillettes d'aluminium sont enrobées d'un revêtement diélectrique n'absorbant pas la lumière visible, à faible réfraction et le revêtement est en outre constitué par : une couche incolore a), qui est appliquée sur les paillettes d'aluminium, qui est le cas échéant pourvue d'une couche extérieure b) incolore constituée par un agent de modification de surface et où la couche a) est essentiellement constituée de dioxyde de silicium et/ou d'oxyde de silicium hydraté et où le revêtement diélectrique présente une épaisseur de 100 à 800 nm.

**2.** Utilisation de pigments brillants argentés à base de paillettes d'aluminium pour la pigmentation de thermoplastiques, où les paillettes d'aluminium sont enrobées d'un revêtement diélectrique n'absorbant pas la lumière visible, à faible réfraction et le revêtement est en outre constitué par : une couche incolore a), qui est appliquée sur les paillettes d'aluminium, qui est le cas échéant pourvue d'une couche extérieure b) incolore constituée par un agent de modification de surface et où la couche a) est essentiellement constituée de dioxyde de silicium et/ou d'oxyde de silicium hydraté.

**3.** Utilisation selon la revendication 1, **caractérisée en ce que** les matériaux synthétiques sont choisis dans le groupe constitué par le polyéthylène (PE), le polypropylène (PP), le polyisobutène (PIB), le poly(chlorure de vinyle) (PVC), le poly(difluorure de vinylidène) (PVDF), le polycarbonate (PC), les mélanges de polycarbonate-polyester, le poly (téréphtalate d'éthylène) (PET), le poly(naphténate d'éthylène) (PEN), le poly(téréphtalate de butylène) (PBT), le polystyrène (PS), les copolymères d'acrylate-butadiène-styrène (ABS), les copolymères de styrène-acrylonitrile (SAN), le poly((méth) acrylate de méthyle) (PM(M)A), le poly((méth)acrylate de butyle) (PB(M)A), les polyamides, tels que le PA 6, le PA 6.6 et le PA 12, les polyéthers, les polyphénylène-éthers, les polyéthersulfones, les polyéthercétones, les poly(sulfures de phénylène), les polyimides, les polyétherimides, les polyesterimides, le polyoxyméthylène, les polyuréthanes (PU, TPU), les résines coulées polymérisables à base de styrène, d'acrylate ou de polyester, les résines de polycondensation post-durcissables à base de mélamine ou d'époxy et les pâtes d'enduction à base de PVC et de PUR.

**4.** Utilisation selon la revendication 1 à 3, **caractérisée en ce que** le revêtement diélectrique présente un indice de réfraction n < 1,8.

**5.** Utilisation selon l'une quelconque des revendications 1 à 4, **caractérisée en ce que** le revêtement diélectrique présente une épaisseur de 250 à 450 nm.

**6.** Matériaux synthétiques qui sont pigmentés avec les pigments brillants selon les revendications 1 à 5.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9935194 A
- JP 62096565 A
- JP 62096566 A

- EP 708154 A
- EP 668329 A